Europäisches Patentamt

**European Patent Office**

**Office européen des brevets**

(11) Veröffentlichungsnummer : **0 008 469**
**B2**

(12) **NEUE EUROPÄISCHE PATENTSCHRIFT**

(45) Veröffentlichungstag der neuen Patentschrift :
26.06.85

(51) Int. Cl.⁴ : **C 10 J   3/54**

(21) Anmeldenummer : **79200380.8**

(22) Anmeldetag : **10.07.79**

(54) **Verfahren zum Vergasen fester, feinkörniger Brennstoffe.**

(30) Priorität : **18.08.78 DE 2836175**

(43) Veröffentlichungstag der Anmeldung :
**05.03.80 Patentblatt 80/05**

(45) Bekanntmachung des Hinweises auf die Patenterteilung : **11.11.81 Patentblatt 81/45**

(45) Bekanntmachung des Hinweises auf die Entscheidung
über den Einspruch : **26.06.85 Patentblatt 85/26**

(84) Benannte Vertragsstaaten :
**BE DE FR GB NL SE**

(56) Entgegenhaltungen :
**DE-A- 2 611 191**
**DE-B- 1 023 844**
**DE-C-   908 516**
**DE-C- 2 325 204**
**FR-A-   970 040**
**FR-A- 1 022 482**
**FR-A- 1 060 326**
**FR-A- 2 304 661**
**GB-A-   665 781**
**US-A- 2 654 665**
**US-A- 2 682 455**
**US-A- 2 803 530**
**US-A- 3 779 725**
**US-A- 4 077 778**

(73) Patentinhaber : **METALLGESELLSCHAFT AG**
**Reuterweg 14 Postfach 3724**
**D-6000 Frankfurt/M.1 (DE)**

(72) Erfinder : **Reh, Lothar, Dr. Dipl.-Ing.**
**Stettiner Strasse 3**
**D-6000 Frankfurt am Main (DE)**
Erfinder : **Hirsch, Martin, Dipl.-Ing.**
**Am Rötheneck 7**
**D-6000 Frankfurt am Main (DE)**
Erfinder : **Baron, Gerhard, Dr. Ing.**
**Nachtigallenweg 1**
**D-6238 Hofheim (DE)**
Erfinder : **Blaum, Eberhard, Dr. Ing.**
**Hans-Meissnerstrasse 12**
**D-6384 Oberreifenberg (DE)**
Erfinder : **Hafke, Carl, Dr. Ing.**
**Waldeckerstrasse 19**
**D-6000 Frankfurt am Main (DE)**

(74) Vertreter : **Fischer, Ernst, Dr.**
**Reuterweg 14**
**D-6000 Frankfurt am Main 1 (DE)**

## Beschreibung

Die Erfindung betrifft ein Verfahren zum Vergasen fester, feinkörniger Brennstoffe zur Erzeugung eines Wasserstoff, Kohlenoxide und Methan enthaltenden Produktgases in zwei miteinander verbundenen, als zirkulierende Wirbelschichten betriebenen Vergasungsstufen mit mindestens einem der Vergasungsmittel Wasserdampf, Sauerstoff oder Kohlendioxid unter einem Druck im Bereich von 2 bis 150 bar und Temperaturen von 500 bis 1 500 °C, wobei Brennstoffe der ersten Vergasungsstufe aufgegeben werden, aus jeder Vergasungsstufe ständig ein erheblicher Teil der Feststoffe und Produktgas abgeführt und getrennt wird, abgetrennte Feststoffe aus der ersten Vergasungsstufe in die zweite Vergasungsstufe geleitet und dort mit Sauerstoff enthaltendem Vergasungsmittel bei Temperaturen, die höher als in der ersten Vergasungsstufe sind und unter dem Ascheschmelzpunkt liegen, praktisch vollständig vergast werden.

Als feste Brennstoffe kommen für das Verfahren insbesondere Kohle und Braunkohle, aber auch Torf in Frage. Der Brennstoff wird der Vergasung mit Korngrößen unter 3 mm aufgegeben. Sauerstoff kann als Vergasungsmittel in an sich bekannter Weise in Form von technisch reinem Sauerstoff, Luft oder mit Sauerstoff angereicherter Luft angewandt werden. Als oxidierendes Vergasungsmittel wirkt bei den relativ hohen Vergasungstemperaturen auch das Kohlendioxid.

Aus der deutschen Offenlegungsschrift 26 11 191 (dazu korrespondiert FR-A-2 304 661) ist die Vergasung von kohlenstoffhaltigem Material bekannt, wobei zwei zirkulierende Wirbelschichten zusammengeschaltet sind. Der ersten Vergasungsstufe, die als zirkulierende Wirbelschicht ausgestaltet ist, wird fester und auch flüssiger Brennstoff zusammen mit Wasserdampf aufgegeben. Der Feststoffrückstand der Umsetzung in dieser Stufe gelangt teilweise in die zweite zirkulierende Wirbelschicht, wo eine Umsetzung bei höheren Temperaturen als in der ersten Stufe in Gegenwart von sauerstoffhaltigem Gas und Wasserdampf stattfindet. Der Feststoffrückstand aus der zweiten Vergasungsstufe wird in die erste Stufe zurückgeleitet, um dort für ausreichend hohe Temperaturen zu sorgen. Allerdings enthalten diese aus der zweiten Stufe in die erste Stufe geleiteten Feststoffe einen hohen Anteil an Asche und nur noch wenig Kohlenstoff, so daß die erste Stufe mit beträchtlichen Mengen an unvergasbarer Materie belastet wird. Außerdem ist der feste Brennstoff nach der zweiten Vergasungsstufe so reaktionsträge geworden, daß er in der ersten Vergasungsstufe, wo die tiefsten Temperaturen des Verfahrens herrschen, kaum noch umgesetzt werden kann. Die erwünschte Umsetzung zwischen dem frischen festen Brennstoff und dem Vergasungsmittel kann deshalb in der ersten Stufe leicht zum Erliegen kommen bzw. stark negativ beeinflußt werden.

Die DE-B-1 023 844 beschreibt zahlreiche Vergasungsvarianten mit klassischen Wirbelschichten. Dabei geht es darum, in der eigentlichen Vergasung einen ziemlich hohen Aschegehalt aufrechtzuerhalten, damit der Feststoffaustrag verringert wird. Deshalb wird auch Asche aus der heißeren Vergasungsstufe in die kältere Vergasungsstufe zurückgeführt.

Dem erfindungsgemäßen Verfahren liegt die Aufgabe zugrunde, ein Verfahren der eingangs genannten Art mit hoher Leistung auf wirtschaftliche Weise durchzuführen. Erfindungsgemäß wird dies dadurch erreicht, daß der größte Teil der aus der ersten Vergasungsstufe kommenden, in einem Zyklon vom Produktgas abgetrennten Feststoffe vom Zyklon über eine Leitung in den unteren Teil des Wirbelbereichs der ersten Vergasungsstufe zurückgeführt und ein Teil der im Zyklon abgetrennten Feststoffe der zweiten Vergasungsstufe aufgegeben wird, daß mindestens die Hälfte des heißen unzerlegten Produktgases der zweiten Vergasungsstufe praktisch feststofffrei als Wirbelmedium in die erste Vergasungsstufe geleitet wird, daß ein Teil der nach der zweiten Vergasungsstufe abgetrennten Feststoffe in den unteren Teil des Wirbelbereichs der zweiten Vergasungsstufe zurückgeführt wird und die restlichen abgetrennten Feststoffe gekühlt und aus dem Verfahren entfernt werden.

Beim erfindungsgemäßen Verfahren wird bewußt vermieden, Feststoffe aus der zweiten Vergasungsstufe in die erste Stufe zu leiten. Wohl läßt sich nich ganz verhindern, daß das von der zweiten Stufe in die erste Stufe geleitete Produktgas geringe Mengen feiner Feststoffe mit sich führt. Diese mitgerissenen Feststoffe fallen jedoch gegenüber den in der ersten Vergasungsstufe vorliegenden Feststoffmengen nicht ins Gewicht und machen weniger als 1 % des Gewichts der Feststoffe in der zirkulierenden Wirbelschicht aus. Wichtig ist beim erfindungsgemäßen Verfahren aber, daß durch das Produktgas aus der zweiten Stufe Wärme in die erste Stufe eingebracht wird. So ist es auch möglich, der ersten Stufe neben dem Wasserdampf und eventuell noch $CO_2$ als Vergasungsmittel nur wenig oder keinen Sauerstoff zuzuführen.

Die zirkulierende Wirbelschicht zeichnet sich zum Unterschied vom klassischen Wirbelbett dadurch aus, daß die feinkörnigen Feststoffe ohne definierte Granzschicht im Reaktionsraum vorliegen. Es gibt keinen Dichtesprung zwischen dichter Phase und darüber befindlichem Staubraum mehr, jedoch nimmt innerhalb des Reaktors die Feststoffkonzentration von unten nach oben ständig ab. Das Produktgas der zirkulierenden Wirbelschicht enthält große Feststoffmengen, die vom Gas getrennt und in die Wirbelschicht zurückgeführt werden. Wegen der hohen Gasgeschwindigkeiten in der zirkulierenden Wirbelschicht laufen die Reaktionen bei vorgegebener Temperatur mit hoher Geschwindigkeit ab. Das Verfahrensprinzip der zirkulierenden Wirbelschicht ist bekannt und z. B. in Ullmanns Enzyklopädie der technischen Chemie, 4. Auflage (1973), Band 3, Seiten 433-446, beschrieben. Einzelheiten der zirkulierenden Wirbelschicht sind auch aus der US-Patent schrift 3 579 616 bekannt.

Für die Umsetzung in der zweiten Vergasungsstufe kommen verschiedene Reaktortypen in Frage. Die zweite Stufe kann z. B. ebenfalls als zirkulierende Wirbelschicht ebenso wie die erste Stufe betrieben werden. Vorzugsweise wird dabei die Temperatur in der zweiten Vergasungsstufe unterhalb des Ascheschmelzpunktes liegen. Will man aber in der zweiten Vergasungsstufe auch Temperaturen oberhalb des Ascheschmelzpunktes zulassen, so kann diese Stufe vorzugsweise als Schmelzzyklon ausgestaltet werden. Der Schmelzzyklon ist aus der Feuerungstechnik bekannt und z. B. in der deutschen Offenlegungsschrift 20 10 872 sowie in der US-Patentschrift 3 915 692 beschrieben.

Um die Durchsatzleistungen weiter zu steigern, kann man in den Vergasungsstufen bei Drücken von 5 bis 150 bar und vorzugsweise im Bereich von 10 bis 60 bar arbeiten. Aus diesem Grund kann es sich auch empfehlen, neben dem Feststoffrückstand aus der ersten Stufe auch noch frischen Brennstoff in die zweite Vergasungsstufe zu geben. Ferner ist es möglich, in der ersten und/oder zweiten Vergasungsstufe in Gegenwart katalytisch wirksamer, die Vergasung beschleunigender Substanzen zu arbeiten. Solche Substanzen sind z. B. Alkalisalze wie etwa $K_2CO_3$. Diese·Substanzen können mit dem festen Brennstoff aber auch mit dem Vergasungsmittel eingebracht werden, und zwar sowohl in der ersten als auch in der zweiten Vergasungsstufe.

Für die Praxis ist es zweckmäßig, die Feststoffmengen in der ersten und zweiten Vergasungsstufe so zu wählen, daß sie zueinander im Gewichtsverhältnis von 6 : 1 bis 1 : 2 stehen.

In vielen Fällen ist es erwünscht, ein an Schwefelverbindungen möglichst armes Produktgas zu erzeugen. Wohl lassen sich die Schwefelverbindungen, insbesondere $H_2S$, aus dem Produktgas durch Reinigungsmaßnahmen entfernen, die aber aufwendig sind. Eine andere Möglichkeit besteht darin, die Vergasung des Brennstoffs in Gegenwart von Schwefel aufnehmenden Substanzen durch zuführen. Solche Substanzen sind z. B. Kalkstein, Dolomit, Eisenoxid oder Gemische dieser Stoffe. Sie können in feinkörniger Form bereits dem frischen Brennstoff beigemischt sein, bevor er zur Vergasung geführt wird. Es ist aber auch möglich, diese Substanzen separat in die erste und/oder zweite Vergasungsstufe einzuführen. Der Schwefel wird dadurch zu Verbindungen gebunden, die sich bei den Vergasungstemperaturen nicht zersetzen und schließlich nicht mit dem Produktgas, sondern in Form von Asche abgezogen werden.

In der ersten Vergasungsstufe werden die Temperaturen zumeist bei 700 bis 1 200 °C und vorzugsweise bei 800 bis 1 100 °C liegen. Hohe Temperaturen werden bevorzugt, wenn das Produktgas keine oder nur möglichst wenig kondensierbare Bestandteile, insbesondere Teer und flüssige Kohlenwasserstoffe, enthalten soll. Zum Einstellen der Temperatur in den Vergasungsstufen kann insbesondere der Gehalt an Sauerstoff im Vergasungsmittel dienen. Zusätzliche Variationsmöglichkeiten ergeben sich durch die Wahl der Eintrittstemperatur der an der Umsetzung beteiligten Substanzen. Auch durch indirekten Wärmeaustausch mittels Kühlmittelleitungen kann die Temperatur in den Vergasungsstufen variiert werden.

Es ist zweckmäßig, in der zweiten Vergasungsstufe mit einer höheren Temperatur als in der ersten Vergasungsstufe zu arbeiten. Dies erreicht man dadurch, daß man im Vergasungsmittel der zweiten Stufe einen relativ hohen Gehalt an Sauerstoff einstellt. Höhere Temperaturen in der zweiten gegenüber der ersten Stufe sind dann nötig, wenn der Feststoffrückstand aus der ersten Stufe reaktionsträge ist und ausreichend hohe Reaktionsgeschwindigkeiten nur bei höheren Temperaturen erreichbar sind.

Da das aus der zirkulierenden Wirbelschicht aufsteigende Produktgas ständig beträchtliche Feststoffmengen mit sich führt, kann durch geeignete Wahl des Ortes der Brennstoffaufgabe dessen Verweilzeit in der Umsetzung gesteuert werden. Gibt man den Brennstoff unten in die Vergasungsstufe, so ergeben sich lange Verweilzeiten, in welchen die Schwelprodukte des Brennstoffs praktisch vollständig in der Vergasung umgesetzt werden können. Gibt man den Brennstoff in den oberen Bereich der Wirbelschicht auf, so erreicht man nur kurze Verweilzeiten und ein an Schwelprodukten reiches Produktgas.

Das bei der erfindungsgemäßen Vergasung gewonnene Produktgas wird im allgemeinen nicht nur von Feststoffen gereinigt werden müssen, sondern auch noch unterschiedlichen Konditionierungen zu unterwerfen sein, bevor es in gewünschter Weise verwendet werden kann. Vor allem wird es als Ausgangsprodukt für Synthesegas oder Heizgase dienen können und zu diesem Zweck kann es einer thermischen oder katalytischen Nachbehandlung unterzogen werden. Eine Nachspaltung kann z. B. darauf gerichtet sein, Kohlenwasserstoffe im Produktgas in die Synthesegas-Komponenten CO und $H_2$ umzuwandeln. Andererseits kann auch eine hydrierende Spaltung erfolgen, um kondensierbare Kohlenwasserstoffe weitgehend in Methan umzuformen. Das Gas kann als Reduktionsgas für die direkte Reduzierung von Eisenerzen, für die Verwendung in kombinierten Gas- und Dampfturbinen-Kraftwerken oder allgemein als Synthesegas verwendet werden. Das Synthesegas kann dann in bekannter Weise in synthetisches Erdgas oder aber auch in Methanol oder Ammoniak umgewandelt werden. Das Synthesegas steht aber auch für andere chemische Verfahren wie z. B. die Oxo-Synthese oder die Herstellung von Essigsäure zur Verfügung.

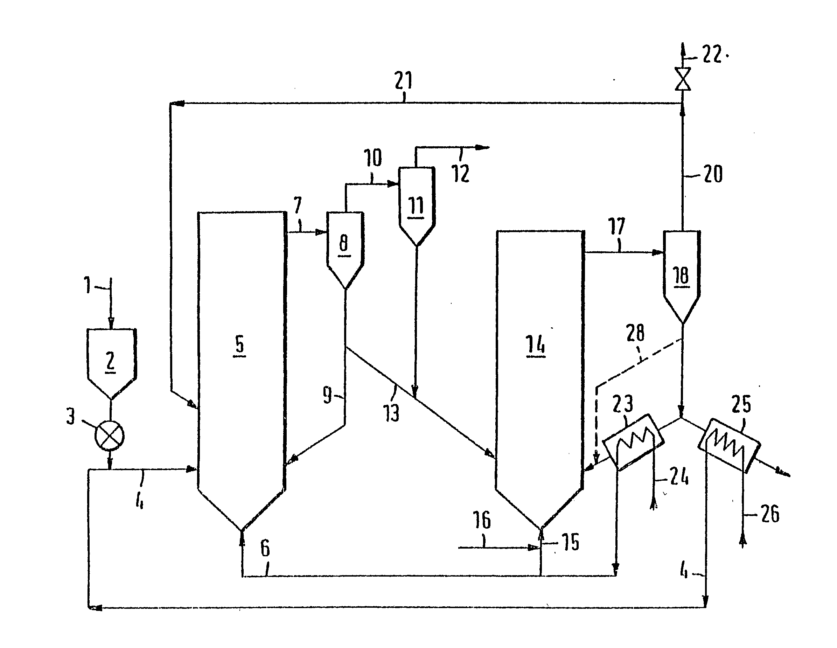

Ein Beispiel für die Verfahrensführung wird mit Hilfe der Zeichnung erläutert.

Feinkörnige Kohle mit weniger als 3 mm Korngröße kommt aus einer nicht dargestellten Schleuse und wird in der Leitung 1 zu einer Druckvorlage 2 geführt. Von der Druckvorlage läuft die Kohle durch eine Zuteilvorrichtung 3 und wird pneumatisch über die Leitung 4 der ersten Vergasungsstufe 5 aufgegeben, als Trägergas für den Transport der Kohle in der Leitung 4 dient vorzugsweise Kohlendioxid oder Stickstoff oder ein Gemisch dieser Gase.

Die erste Vergasungsstufe 5 wird durch einen Druckreaktor gebildet, in welchem sich der Brennstoff im Zustand der zirkulierenden Wirbelschicht befindet. In der zirkulierenden Wirbelschicht wird ständig ein erheblicher Teil der Feststoffe durch das Wirbelgas aus dem Wirbelbereich gefördert, vom Gas getrennt und zurück in den Wirbelbereich geführt. Die Kohle zusammen mit dem Trägergas wird über eine nicht dargestellte Ringleitung mit mehreren, zum Zentrum des Reaktors gerichteten Düsen in die Vergasungsstufe 5 eingeführt. Das gleichzeitig auch als Wirbelgas dienende Vergasungsmittel, überwiegend Wasserdampf, wird durch die Leitung 6 zugeführt. Das Vergasungsmittel kann auch noch Sauerstoff, Luft oder ein Gemisch davon enthalten.

Durch die relativ hohen Gasgeschwindigkeiten in der ersten Vergasungsstufe 5 bildet sich in diesem eine intensiv durchmischte, stark verdünnte Wirbelschicht aus, wobei ständig Feststoffwolken nach oben und Feststoffsträhnen nach unten transportiert werden. Der zugeführte feinkörnige Brennstoff wird dabei teilweise vergast.

Das Produktgas, das die Vergasungsstufe 5 durch die Leitung 7 verläßt, enthält einen hohen Anteil an Feststoffen. Der größte Teil dieser Feststoffe wird im nachgeschalteten Zyklon 8 vom Gas getrennt und über eine Leitung 9 zum Unterteil der ersten Vergasungsstufe 5 in deren Wirbelbereich zugeführt. Die Zusammenschaltung von Wirbelbettreaktor, Produktgasleitung 7, Zyklon 8 und Rückführleitung 9 ist charakteristisch für die apparative Ausgestaltung einer zirkulierenden Wirbelschicht.

Das den Zyklon 8 verlassende Produktgas wird in der Leitung 10 zu einem zweiten Zyklon 11 geführt und dort erneut von einem Teil der noch vorhandenen Feststoffe befreit. Das Produktgas in der Leitung 12 steht für die weitere Verarbeitung, Reinigung und Umwandlung zur Verfügung.

Ein Teil der im Zyklon 8 anfallenden Feststoffe wird in die Leitung 13 abgezweigt und zusammen mit den Feststoffen aus dem Zyklon 11 in die zweite Vergasungsstufe 14 geführt. Die zweite Vergasungsstufe 14 gemäß der Zeichnung ist prinzipiell genau so ausgestaltet wie die erste Vergasungsstufe 5. Abweichend von der Zeichnung könnte als zweite Vergasungsstufe aber auch beispielsweise ein Schmelzzyklon verwendet werden.

Der zweiten Vergasungsstufe 14 wird Wasserdampf und freien Sauerstoff enthaltendes Vergasungsmittel durch die Leitung 15 zugeführt. Zusätzlicher Sauerstoff kann bei Bedarf noch aus der Leitung 16 kommen. Die Vergasungsmittel bilden in der zweiten Vergasungsstufe 14 eine zirkulierende Wirbelschicht aus, wie sie schon zusammen mit der ersten Vergasungsstufe 5 erläutert wurde. Eine höhere Sauerstoffzufuhr in die zweite Vergasungsstufe 14 bewirkt eine höhere Temperatur als in der ersten Vergasungsstufe 5.

Feststoffhaltiges Produktgas verläßt die zweite Vergasungsstufe 14 durch die Leitung 17, wobei die Feststoffe im nachgeschalteten Zyklon 18 weitgehend aus dem Gas abgetrennt werden. Das weitgehend feststofffreie Produktgas wird mindestens zur Hälfte über die Leitungen 20 und 21 zur ersten Vergasungsstufe 5 zurückgeführt. Nicht zurückgeführtes Produktgas steht in der Leitung 22 zur weiteren Verwendung bereit. Beim üblichen Betrieb der Vergasungsanlage wird jedoch sämtliches Produktgas über die Leitungen 20 und 21 wieder der ersten Vergasungsstufe 5 aufgegeben.

Bei den im Zyklon 18 abgeschiedenen Feststoffen handelt es sich um kohlenstoffarme Asche. Zum Ausnutzen der fühlbaren Wärme dieser Feststoffe kann man sie teilweise durch einen ersten Kühler 23 führen, bevor sie wieder der zweiten Vergasungsstufe 14 aufgegeben werden. Der erste Kühler 23 kann z. B. als Wirbelbettkühler ausgestaltet sein. Im Kühler 23 werden Vergasungsmittel aus der Leitung 24 erwärmt, bevor sie in die beiden Vergasungsstufen 5 und 14 geführt werden. Ein abgezweigter Teil der Feststoffe gibt Wärme in einem zweiten Kühler 25 ab. In diesem Kühler 25 wird das in der Leitung 26 herangeführte Trägergas erwärmt, das dann in der Leitung 4 den frischen Brennstoff zur ersten Vergasungsstufe 5 fördert. Die Kühler 23 und 25 können auf verschiedenartige Weise ausgestaltet sein und es ist. z. B. möglich, in einem Kühler sowohl einen direkten als auch indirekten Wärmeübergang zwischen den heißen Feststoffen und einem oder mehreren Kühlmedien herzustellen. Vorsorglich ist auch eine gestrichelt eingezeichnete, den Kühler 23 umgehende Bypassleitung 28 vorgesehen.

Beispiel 1

In einer Verfahrensführung entsprechend der Zeichnung werden pro Stunde 50 t Kohle vergast. Die Kohle hat, wasser- und aschefrei gerechnet, folgende Analyse :

| | |
|---|---|
| C | 86,56 Gew.% |
| O | 5,27 Gew.% |
| H | 5,22 Gew.% |
| N | 1,62 Gew.% |
| S | 1,18 Gew.% |
| Cl | 0,15 Gew.% |

Die Kohle enthält dazu noch 20 % Asche. Die Vergasung in der ersten Vergasungsstufe 5 erfolgt mit dem Produktgas der zweiten Vergasungsstufe 14 sowie pro kg Kohle mit 0,1 Nm³ Wasserdampf und 0,2 Nm³ $CO_2$, wobei das $CO_2$ zum pneumatischen Eintrag der Kohle über die Leitung 4 dient. Der Reaktor der ersten Vergasungsstufe 5 hat eine lichte Höhe von 15 m und einen inneren Durchmesser von 3 m. Der Vergasungsdruck beträgt 30 bar.

Durch die Leitung 12 verlassen pro kg Kohle 2,4 Nm³ Produktgas mit 1 050 °C die Vergasungsanlage. Das Produktgas enthält (trocken gerechnet) :

| | |
|---|---|
| $CO_2$ | 14,6 Vol.% |
| CO | 58,7 Vol.% |
| $H_2$ | 25,0 Vol.% |
| $CH_4$ | 6,8 Vol.% |
| $N_2$ | 0,5 Vol.% |
| HCl | 0,1 Vol.% |
| $H_2S$ | 0,3 Vol.% |

Es wird durch Einsprühen von Wasser und rückgeführtem Kondensat in an sich bekannter Weise gekühlt und grob gereinigt.

Durch die Leitung 13 werden stündlich 14,3 t kohlenstoffhaltiger Rückstand zur zweiten Vergasungsstufe 14 geleitet und dort pro kg Kohle mit 0,51 Nm³ $O_2$ und 0,4 Nm³ Wasserdampf aus der Leitung 15 umgesetzt. Der Druck liegt bei 30 bar ; die Vergasungsstufe 14 ist apparativ genauso gestaltet wie die erste Vergasungsstufe 5. Das ganze dabei entstehende Produktgas mit einer Temperatur von 1 200 °C wird über den Zyklon 18 sowie die Leitungen 20 und 21 zurück zur ersten Vergasungsstufe geführt. Im Zyklon 18 fallen pro Stunde 100 t Feststoffe an, die in Verhältnis 9 : 1 auf die Kühler 23 und 25 verteilt werden. Im Kühler 23 wird die Temperatur der Feststoffe von 1 200 °C auf 1 100 °C gesenkt, bevor sie zurück in die Vergasungsstufe 14 geführt werden.

Beispiel 2

Zur Erzeugung eines Brenngases für ein kombiniertes gas-Dampfturbinenkraftwerk wird einer der Zeichnung entsprechenden Anlage eine Kohle wie im Beispiel 1 zugeführt. Zusätzlich zur Kohle werden 75 g Kalkstein pro kg Kohle dem Reaktor 5 zur Entschwefelung des Produktgases zugesetzt.

Die Kohle wird in den Reaktor 5 mit 0,2 Nm³ Luft/kg Kohle pneumatisch eingetragen, weiterhin werden dem Reaktor 5 das Produktgas des zweiten Reaktors 14 und 0,1 Nm³ Wasserdampf pro kg Kohle zugeführt. Der Druck beträgt 30 bar.

Die Analyse des Gases, das in einer Menge von 4,2 Nm³/kg Kohle die Anlage durch die Leitung 12 mit einer Temperatur von 950 °C verläßt, lautet, trocken gerechnet :

| | |
|---|---|
| $CO_2$ | 8,6 Vol.% |
| CO | 22,2 Vol.% |
| $H_2$ | 7,6 Vol.% |
| $CH_4$ | 7,5 Vol.% |
| $N_2$ | 54,06 Vol.% |

| | |
|---|---|
| HCl | 0,02 Vol.% |
| $H_2S$ | 0,02 Vol.% |

Dieses weitgehend entschwefelte Gas wird, gegebenenfalls nach einer weiteren Staubentfernung, einem unter erhöhtem Druck betriebenen Dampfkessel als Brenngas zugeleitet.

Durch die Leitung 13 werden stündlich 14,7 t kohlenstoffhaltiger Rückstand zur zweiten Vergasungsstufe geleitet und dort mit 2,6 Nm³ Luft und 0,4 Nm³ Wasserdampf, bezogen auf 1 kg Kohle zum Reaktor 5, umgesetzt. Der Druck liegt bei 30 bar, die Temperatur bei 1 200 °C, das gesamte Produktgas dieser Stufe wird über den Zyklon 18 und die Leitungen 20 und 21 zurück zur ersten Vergasungsstufe geführt.

Die im Zyklon 18 stündlich anfallende Feststoffmengen von ca. 105 t wird — wie im ersten Beispiel — auf die Kühler 23 und 25 verteilt, wobei im Kühler 23 die Feststoffe auf ca. 1 000°C abgekühlt werden, bevor sie in den Reaktor 14 gelangen.

Beispiel 3

In der Anlage gemäß der Zeichnung wird ein Synthesegas aus Braunkohle erzeugt, deren Analyse lautet

| | |
|---|---|
| C | 68,0 Gew.% |
| H | 5,3 Gew.% |
| O | 25,7 Gew.% |
| N | 0,6 Gew.% |
| S | 0,4 Gew.% |

und die 5 % Asche sowie 8,0 % Feuchte enthält. Die Braunkohle wird pro kg dem Reaktor 5 mit 0,2 Nm³$CO_2$ pneumatisch zugeführt. Außerdem treten in den Reaktor 5 durch die Leitung 21 das Produktgas der zweiten Vergasungsstufe 14 sowie 0,1 Nm³ Dampf/kg Kohle ein. Der Vergasungsdruck liegt bei 30 bar, die Temperatur im Reaktor 5 bei 1 050 °C.

Das die Anlage durch die Leitung 12 verlassende Gas in einer Menge von 2,46 Nm³ pro kg Kohle hat, trocken gerechnet, folgende Zusammensetzung :

| | |
|---|---|
| $CO^2$ | 30,47 Vol.% |
| CO | 43,30 Vol.% |
| $H_2$ | 24,67 Vol.% |
| $CH_4$ | 1,18 Vol.% |
| $N_2$ | 0,26 Vol.% |
| $H_2S$ | 0,12 Vol.% |

Es wird üblicherweise einer Abkühlung, Gasreinigung und Konditionierung unterworfen, bevor es der Synthese zugeleitet wird.

Der zweiten Vergasungsstufe 14 werden durch die Leitung 13 stündlich 3,7 t kohlenstoffhaltiger Rückstand zugeführt und dort pro kg Einsatzkohle mit 0,3 Nm³ Wasserdampf und 0,74 Nm³ Sauerstoff bei 1 200 °C und 30 bar vergast. Die im Zyklon 18 anfallende Feststoffmenge von 25 t/h wird — wie im Beispiel 1 — auf die Kühler 23 und 24 aufgeteilt, wobei die Temperaturabsenkung im Kühler 23 etwa 300 °C beträgt.

## Patentansprüche

1. Verfahren zum Vergasen fester, feinkörniger Brennstoffe zur Erzeugung eines Wasserstoff, Kohlenoxide und methan enthaltenden Produktgases in zwei miteinander verbundenen, als zirkulierende Wirbelschichten Betriebenen Vergasungsstufen mit mindestens einem der Vergasungsmittel Wasserdampf, Sauerstoff oder Kohlendioxid unter einem Druck im Bereich von 2 bis 150 bar und Temperaturen von 500 bis 1 500 °C, wobei Brennstoffe der ersten Vergasungsstufe aufgegeben werden, aus jeder Vergasungsstufe ständig ein erheblicher Teil der Feststoffe und Produktgas abgeführt und getrennt wird, abgetrennte Feststoffe aus der ersten Vergasungsstufe in die zweite Vergasungsstufe geleitet und dort mit Sauerstoff enthaltendem Vergasungsmittel bei Temperaturen, die höher als in der ersten Vergasungsstufe sind und unter dem Ascheschmelzpunkt liegen, praktisch vollständig vergast werden dadurch gekennzeichnet, daß der größte Teil der aus der ersten Vergasungsstufe kommenden, in einem Zyklon vom Produktgas abgetrennten Feststoffe vom Zyklon über eine Leitung in den unteren Teil des Wirbelbereichs der ersten Vergasungsstufe zurückgeführt und ein Teil der im Zyklon abgetrennten Feststoffe der zweiten Vergasungsstufe aufgegeben wird, daß mindestens die Hälfte des heißen hunzerlegten Produktgases der zweiten Vergasungsstufe praktisch feststoffrei als Wirbelmedium in die erste Vergasungsstufe geleitet wird, daß ein Teil der nach der zweiten Vergasungsstufe abgetrennten Feststoffe in den unteren Teil des Wirbelbereichs der zweiten Vergasungsstufe zurückgeführt wird und die restlichen abgetrennten Feststoffe gekühlt und aus dem Verfahren entfernt werden.

2. Verfahren nach Anspruch 1, dadurch gekennzeichnet, daß der Druck in den Vergasungsstufen im Bereich von 5 bis 150 bar und vorzugsweise im Bereich von 10 bis 60 bar liegt.

3. Verfahren nach Anspruch 1 oder 2, dadurch gekennzeichnet, daß der zweiten Vergasungsstufe neben dem Feststofrückstand der ersten Stufe auch frischer Brennstoff aufgegeben wird.

4. Verfahren nach Anspruch 1 oder einem der folgenden, dadurch gekennzeichnet, daß in der ersten und/oder zweiten Vergasungsstufe katalytisch wirksame, die Vergasung beschleunigende Substanzen zugegeben werden.

5. Verfahren nach Anspruch 1 oder einem der folgenden, dadurch gekennzeichnet, daß die Temperatur in der ersten Vergasungsstufe zwischen 700 und 1 200 °C und vorzugsweise zwischen 800 und 1 100 °C liegt.

6. Verfahren nach Anspruch 1 oder einem der folgenden, dadurch gekennzeichnet, daß das heiße Produktgas aus der zweiten Vergasungsstufe oberhalb der Vergasungsmittelzufuhr in die erste Vergasungsstufe geleitet wird.

7. Verfahren nach einem der Ansprüche 1 bis 6, dadurch gekennzeichnet, daß der Brennstoff in den oberen Bereich der ersten Vergasungsstufe aufgegeben und ein an Schwelprodukten reiches Produktgas abgeführt wird.

## Claims

1. A process of gasifying fine-grained solid fuels to produce a product gas containing hydrogen, carbon oxides and methane in two interconnected gasification stages operated as circulating fluidized beds, by a treatment with at least one of the gasifying agents water vapour, oxygen or carbon dioxide under a pressure in the range from 2 to 150 bars and at temperatures from 500 to 1 500 °C, wherein fuels are supplied to the first gasification stage, a considerable part of the solids and product gas is continuously withdrawn from each gasification stage and is separated, and separated solids from the first gasification stage are supplied to the second gasification stage and are virtually completely gasified therein by a treatment with an oxygen-containing gasifying agent at temperatures which exceed those in the first gasification stage and are below the melting point of ash, characterized in that a major part of the solids which have come from the first gasification stage and have been separated from the product gas in a cyclone is recycled through a line to the lower portion of the fluidizing region of the first gasification stage, part of the solids separated in the cyclone is supplied to the second gasification stage, at least one-half of the hot, undecomposed product gas of the second gasification stage is supplied virtually without solids to the first gasification stage as a fluidizing fluid, part of the solids which have been separated behind the second gasification stage is recycled to the lower portion of the fluidizing region of the second gasification stage, and the remaining separated solids are cooled and removed from the process.

2. A process according to claim 1, characterized in that the pressure in the gasification stages is in the range from 5 to 150 bars, preferably in the range from 10 to 60 bars.

3. A process according to claim 1 or 2, characterized in that the second gasification stage is supplied also with fresh fuel in addition to the residual solids from the first stage.

4. A process according to claim 1 or any of the following claims, characterized in that the first and/or second gasification stage is supplied with catalytically active substances which accelerate the gasification.

5. A process according to claim 1 or any of the following claims, characterized in that the temperature in the first gasification stage lies between 700 and 1 200 °C, preferably between 800 and 1 100 °C.

6. A process according to claim 1 or any of the following claims, characterized in that the hot product gas from the second gasification stage is supplied to the first gasification stage above the gasifying agent inlet.

7. A process according to any of claims 1 to 6, characterized in that the fuel is supplied to the upper region of the first gasification stage and a product gas rich in distillation products is withdrawn.

**Revendications**

1. Procédé de gazéification de combustibles solides en grains fins en vue d'obtenir un gaz de production, contenant de l'hydrogène, des oxydes de carbone et du méthane, en deux stades de gazéification fonctionnant en tant que couches fluidisées circulantes, reliés entre eux, et utilisant au moins l'un des agents de gazéification tel que la vapeur d'eau, l'oyxgène ou le dioxyde de carbone, en opérant sous une pression comprise entre 2 et 150 bars et à des températures allant de 500 à 1 500 °C, des combustibles étant chargés dans le premier stade de gazéification, une partie importante des matières solides et des gaz produits étant continuellement évacuée et isolée de chaque stade de gazéification, des matières solides isolées du premier stade de gazéification étant introduites dans le deuxième stade de gazéification pour y être gazéifiées pratiquement complètement au moyen d'un agent de gazéification contenant de l'oxygène, à des températures qui sont supérieures à celles du premier stade de gazéification et qui sont situées en-dessous du point de fusion des cendres, caractérisé en ce que la pus grande partie des matières solides venant du premier stade de gazéification et séparées du gaz produit dans un cyclone est ramenée du cyclone, via un conduit, dans la partie inférieure de la région fluidisée du premier stade de gazéification et en ce qu'une partie des matières solides séparées dans le cyclone est chargée dans le deuxième stade de gazéification, en ce qu'au moins la moitié du gaz produit chaud et non décomposé venant du deuxième stade de gazéification est introduit, en étant pratiquement exempt de matières solides, en tant que fluide de fluidisation dans le premier stade de gazéification, en ce qu'une partie des matières solides séparées après le deuxième stade de gazéification est ramenée dans la partie inférieure de la région fluidisée du deuxième stade de gazéification et en ce que les matières solides séparées restantes sont refroidies et retirées du processus.

2. Procédé selon la revendication 1, caractérisé en ce que la pression qui règne dans les stades de gazéification est comprise entre 5 et 150 bars, de préférence entre 10 et 60 bars.

3. Procédé selon la revendication 1 ou 2, caractérisé en ce qu'on ajoute également du combustible frais en plus du résidu de matières solides du premier stade de gazéification dans le deuxième stade.

4. Procédé selon la revendication 1 ou l'une quelconque des revendications suivantes, caractérisé en ce qu'on ajoute, dans le premier et/ou le deuxième stade de gazéification, des substances catalytiquement actives, accélérant la gazéification.

5. Procédé suivant la revendication 1 ou l'une quelconque des revendications qui la suit, caractérisé en ce que la température du premier stade de gazéification est comprise entre 700 et 1 200 °C, de préférence entre 800 et 1 100 °C.

6. Procédé suivant la revendication 1 ou l'une quelconque des revendications qui la suit, caractérisé en ce qu'on envoie du gaz de production chaud, provenant du second stade de gazéification, au-dessus de l'arrivée du fluide de gazéification dans le premier stade de gazéification.

7. Procédé suivant l'une quelconque des revendications 1 à 6, caractérisé en ce qu'on charge le combustible dans la région supérieure du premier stade de gazéification et en ce qu'on soutire un gaz de production riche en produits de distillation.

1